# EUROPÄISCHE PATENTSCHRIFT

(11) **EP 2 988 979 B1**
(45) Veröffentlichungstag und Bekanntmachung des Hinweises auf die Patenterteilung: **22.11.2017**
(21) Anmeldenummer: 14714237.6
(22) Anmeldetag: 27.03.2014
(51) Int. Cl.: B60W 10/06, B60W 10/08, B60W 10/26, B60W 20/00, B60W 50/00

(54) **BETRIEBSSTRATEGIE FÜR HYBRIDFAHRZEUGE ZUR REALISIERUNG EINER LASTPUNKTVERSCHIEBUNG, EINER REKUPERATION UND EINES BOOST**
HYBRID VEHICLE OPERATING STRATEGY FOR IMPLEMENTING A LOAD POINT SHIFT, A RECUPERATION, AND A BOOST
STRATÉGIE DE FONCTIONNEMENT POUR VÉHICULES HYBRIDES POUR EFFECTUER UN DÉPLACEMENT DU POINT DE CHARGE, UNE RÉCUPÉRATION ET UNE SURALIMENTATION

(30) Priorität: 26.04.2013 DE 102013207680
(43) Veröffentlichungstag der Anmeldung: 02.03.2016
(73) Patentinhaber: Deere & Company, Moline, IL 61265 (US)
(72) Erfinder: BARTHEL, Jochen, 67663 Kaiserslautern (DE); MÜNCH, Philipp, 67663 Kaiserslautern (DE); BELL, Markus, 68167 Mannheim (DE); GÖRGES, Daniel, 56291 Birkheim (DE)
(74) Vertreter: Holst, Sönke
(86) Internationale Anmeldenummer: PCT/EP2014/056172
(87) Internationale Veröffentlichungsnummer: WO 2014/173614

(56) Entgegenhaltungen:
- WO-A2-2012/084632
- DE-A1-102004 023 512
- DE-A1-102007 012 129
- DE-A1-102007 024 471
- DE-A1-102008 008 238
- US-A1- 2010 087 978

## Beschreibung

Die Erfindung betrifft ein Verfahren zur Kontrolle eines Hybridantriebs, der einen Verbrennungsmotor, einen vom Verbrennungsmotor antreibbaren Generator, einen Ladungsspeicher und einen Elektromotor umfasst und in einer Lastpunktverschiebungsbetriebsart, einer Rekuperationsbetriebsart und einer Boostbetriebsart betreibbar ist, wobei in der Lastpunktverschiebungsbetriebsart ein Leistungs- oder Drehmomentverteilungsregler die vom Verbrennungsmotor und vom Elektromotor abgegebenen Leistungen oder Drehmomente im Sinne einer Aufrechterhaltung eines vorbestimmten Sollwerts des Ladezustands des Ladungsspeichers vorgibt und der Sollwert des Ladezustands des Ladungsspeichers in der Lastpunktverschiebungsbetriebsart abhängig von Ladezustandsänderungen des Ladungsspeichers in einer zuvor durchlaufenen Rekuperationsbetriebsart und/oder Boostbetriebsart verschoben wird, eine entsprechende Steuereinrichtung und eine Arbeitsmaschine mit einer derartigen Steuereinrichtung .

### Stand der Technik

Hybride Antriebe für Arbeitsmaschinen umfassen einen Verbrennungsmotor, einen vom Verbrennungsmotor angetriebenen Generator, einen Ladungsspeicher und einen Elektromotor. Der Vortrieb der Arbeitsmaschine und/oder der Antrieb von durch die Arbeitsmaschine angetriebenen Komponenten erfolgt durch einen Antriebsstrang, in dem die Antriebsmomente des Verbrennungsmotors und des Elektromotors durch ein Summierungsgetriebe, in der Regel ein Planetengetriebe, überlagert werden oder gemeinsam auf eine Welle einwirken. Derartige Hybridantriebe sind in unterschiedlichen Betriebsarten betreibbar, insbesondere: (a) einer Lastpunktverschiebungsbetriebsart, in welcher der Generator den Ladungsspeicher auflädt oder der aus dem Ladungsspeicher gespeiste Elektromotor ein zusätzliches Antriebsmoment für den Antriebsstrang bereitstellt und den Wirkungsgrad des Verbrennungsmotors verbessert, (b) einer Rekuperationsbetriebsart, in welcher der Elektromotor als Generator dient und die kinetische Energie der Arbeitsmaschine in elektrische Energie zum Aufladen des Ladungsspeichers umwandelt und (c) einer Boostbetriebsart, in welcher der Verbrennungsmotor und der aus dem Ladungsspeicher gespeiste Elektromotor jeweils mit maximaler Leistung betrieben werden, um kurzfristige Lastspitzen zu überwinden. Die Umschaltung zwischen den Betriebsarten erfolgt abhängig von der momentanen Drehzahl des Verbrennungsmotors und dem momentanen Lastmoment.

In der Lastpunktverschiebungsbetriebsart erfolgt eine Aufteilung der Antriebsleistung in die vom Verbrennungsmotor bereitgestellte Leistung und die vom Ladungsspeicher bereitgestellte Leistung. Somit stellen derartige hybride Antriebe einen weiteren Freiheitsgrad gegenüber konventionellen Antrieben bereit, bei denen nur die Leistung des Verbrennungsmotors veränderbar ist. Zur Vorgabe des Drehmoments des Verbrennungsmotors und des Drehmoments des Elektromotors bzw. zur Aufteilung einer bereitzustellenden Leistung auf den Verbrennungsmotor und den Elektromotor werden im Stand der Technik verschiedene Typen von Reglern verwendet, insbesondere Proportional-Integral-Regler (s. DE 10 2006 010 223 A1) oder heuristische Regler. Derartige, so genannte Leistungs- oder Drehmomentverteilungsregler müssen weitere Randbedingungen beachten, wie ein Anstreben einer Aufrechterhaltung des Sollwerts einer bestimmten Ladung im Ladungsspeicher, und sind im Sinne einer Optimierung des Gesamtwirkungsgrades zu optimieren.

Das Übergangsverhalten zwischen den Betriebsarten kann sich bei den im Stand der Technik verwendeten Leistungs- oder Drehmomentverteilungsreglern als problematisch erweisen. Falls beispielsweise die Rekuperationsbetriebsart aktiv ist, wird der Ladezustand des Ladungsspeichers durch die rekuperierte kinetische Energie erhöht. Falls anschließend die Lastpunktverschiebungsbetriebsart aktiv ist, wird der Regler bestrebt sein, den Ladungszuwachs wieder auszugleichen. Dadurch wird die Ladung im Ladungsspeicher wieder vermindert, allerdings auf Kosten eines ungünstigeren Wirkungsgrades des Verbrennungsmotors. Bei einem nachfolgenden Boost fehlt dann jedoch die rekuperierte Ladung im Ladungsspeicher.

Im Stand der Technik sind Betriebsstrategien beschrieben worden, die eine Lastpunktverschiebung, eine Rekuperation und einen Boost kombiniert behandeln und auf Heuristiken oder Optimierungsmethoden basieren. Vorteilhaft bei Heuristiken sind geringe Hardwareanforderungen, jedoch auf Kosten einer oftmals geringen Verbrauchsreduktion und eines hohen Parametrierungsaufwands. Bei Optimierungsmethoden lässt sich eine höhere Verbrauchsminderung erzielen, jedoch bei komplexen Hardwareanforderungen.

Die als gattungsbildend angesehenen DE 10 2007 024 471 A1 und DE 10 2008 008 238 A1 beschreiben Hybridantriebe, bei denen der Soll-Ladezustand einer Batterie von vorhergehenden Boost- und Rekuperationsvorgängen abhängt. Wenn mehr Energie aus der Batterie durch Boostvorgänge entnommen wurde als durch Rekuperation in die Batterie eingespeist wurde, wird der Soll-Ladezustand anschließend erhöht und umgekehrt.

### Aufgabe der Erfindung

Die vorliegende Erfindung hat sich zur Aufgabe gesetzt, die Vorteile der Heuristiken und der Optimierungsmöglichkeiten zu erzielen und die oben erwähnten Nachteile der bisherigen Leistungs- oder Drehmomentverteilungsregler zu vermeiden.

### Lösung

Diese Aufgabe wird erfindungsgemäß durch die Lehre der Patentansprüche 1, 4 und 6 gelöst, wobei in den weiteren Patentansprüchen Merkmale aufgeführt sind, die die Lösung in vorteilhafter Weise weiterentwickeln.

Ein Hybridantrieb umfasst einen Verbrennungsmotor, einen vom Verbrennungsmotor antreibbaren Generator, einen Ladungsspeicher und einen Elektromotor. Durch eine Steuereinrichtung kann der Hybridantrieb wahlweise in einer Lastpunktverschiebungsbetriebsart, einer Rekuperationsbetriebsart und einer Boostbetriebsart betrieben werden. In der Lastpunktverschiebungsbetriebsart gibt ein Leistungs- oder Drehmomentverteilungsregler die vom Verbrennungsmotor und vom Elektromotor abgegebenen Leistungen oder Drehmomente im Sinne einer Aufrechterhaltung eines vorbestimmten Sollwerts des Ladezustands des Ladungsspeichers vor, wobei zusätzlich eine Verbesserung des Wirkungsgrades des Verbrennungsmotors angestrebt wird. Der vom Leistungs- oder Drehmomentverteilungsregler berücksichtigte Sollwert des Ladezustands des Ladungsspeichers wird in der Lastpunktverschiebungsbetriebsart abhängig von Ladezustandsänderungen des Ladungsspeichers verschoben, die in einer zuvor durchlaufenen Rekuperationsbetriebsart und/oder Boostbetriebsart erfolgt sind.

Auf diese Weise wird der Sollwert des Ladezustands des Ladungsspeichers selbsttätig nach einem Rekuperationsbetrieb nach oben oder nach einem Boostbetrieb nach unten verschoben, sodass der Leistungs- oder Drehmomentverteilungsregler nicht mehr versucht, einen mittleren Ladezustand zu erzielen, sondern den Sollwert des Ladezustands besser an den aktuellen Betrieb des Hybridantriebs anpasst. Dadurch kann der Hybridantrieb bei nachfolgenden Rekuperations- oder Boostvorgängen auf die Ladungsmengen zurückgreifen bzw. den Ladungsspeicher wieder auffüllen, ohne die zulässigen Ladungsgrenzen des Ladungsspeichers zu verlassen. Diese Ladungsgrenzen werden auf Werte gesetzt, die eine hinreichende Lebensdauer des Ladungsspeichers gewährleisten und betragen z.B. 20 % der Maximalladung als untere Grenze und 80 % der Maximalladung als obere Grenze.

Falls mehrfach nacheinander eine Rekuperation oder ein Boost auftritt, können die zulässigen Ladungsgrenzen des Ladungsspeichers verletzt werden. Um die Überschreitung der Ladungsgrenzen zu vermeiden, kann in derartigen Fällen der verschobene Sollwert des Ladezustands graduell (z. B. rampenförmig) auf den nominellen Sollwert des Ladungszustands (z. B. 50 % der Maximalladung) zurückgeführt werden.

### Ausführungsbeispiel

In den Zeichnungen ist ein nachfolgend näher beschriebenes Ausführungsbeispiel der Erfindung dargestellt. Es zeigt:
- Fig. 1: eine seitliche Ansicht einer landwirtschaftlichen Arbeitsmaschine in Form eines Traktors mit einer gezogenen Ballenpresse,
- Fig. 2: ein Schema des Antriebsstrangs der Arbeitsmaschine und der zugehörigen Steuereinrichtung, und
- Fig. 3: ein detailliertes Schema der Steuereinrichtung.

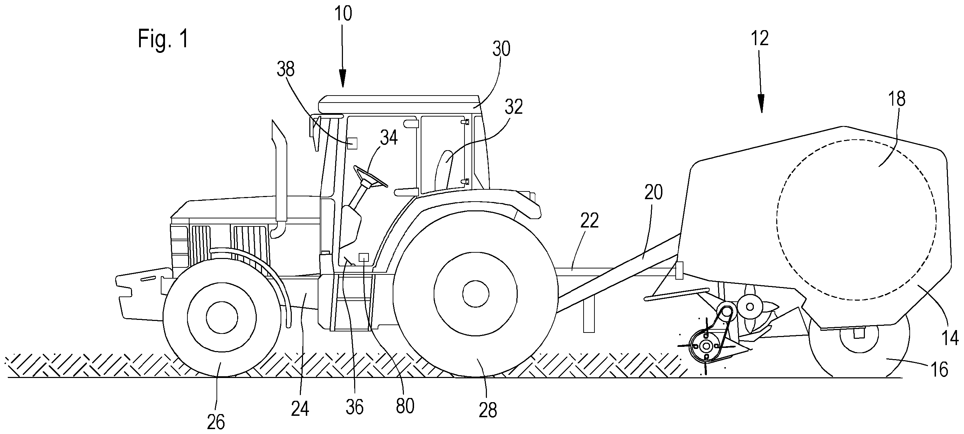

Die Figur 1 zeigt eine landwirtschaftliche Arbeitsmaschine in Form eines Traktors 10 und einer vom Traktor 10 gezogenen Rundballenpresse 12. Die Rundballenpresse 12 ist an sich konventionell und umfasst ein auf Rädern 16 abgestütztes Fahrgestell 14 mit einer Ballenbildungskammer 18. Die Rundballenpresse 12 wird durch eine Deichsel 20 vom Traktor 10 gezogen und ihre antreibbaren Elemente werden mittels einer Zapfwelle 22 vom Traktor 10 her angetrieben. Der Traktor 10 umfasst ein Fahrgestell 24, das sich auf vorderen, lenkbaren Rädern 26 und rückwärtigen, angetriebenen Rädern 28 abstützt. Ein Bedienerarbeitsplatz mit einem Sitz 32 befindet sich in einer Kabine 30. Vom Sitz aus sind ein Lenkrad 34, ein Gaspedal 36 und eine Bedienerschnittstelle 38 mit einer Anzeigeeinrichtung und Tasten und/oder der berührungsempfindlichen Anzeigeeinrichtung betätigbar.

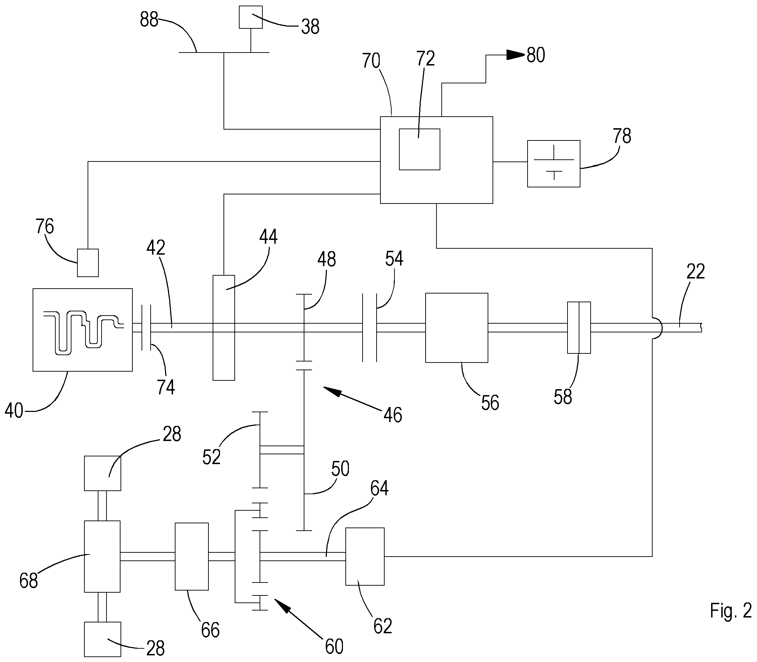

Die Figur 2 zeigt den Antriebsstrang der Arbeitsmaschine. Die Kurbelwelle eines in der Regel als Dieselmotor realisierten Verbrennungsmotors 40 treibt über eine trennbare Kupplung 74 eine Welle 42 an, die ihrerseits einen elektrischen Generator 44, ein Zwischengetriebe 46 mit Zahnrädern 48, 50 und 52 sowie die Eingangsseite einer Zapfwellentrennkupplung 54 antreibt. Die Zapfwellentrennkupplung 54 ist ausgangsseitig mit dem Eingang eines Zapfwellengetriebes 56 verbunden, das ausgangsseitig eine trennbare Zapfwellenkupplung 58 antreibt, an welcher die Zapfwelle 22 der Rundballenpresse 12 abnehmbar angekoppelt ist. Das Zwischengetriebe 46 ist ausgangsseitig mit einem Summiergetriebe 60 verbunden, das in Form eines Planetengetriebes realisiert ist, dessen Ringrad mit dem Ausgangszahnrad 52 des Zwischengetriebes 46 kämmt und dessen Sonnenrad mit der Ausgangswelle 64 eines Elektromotors 62 verbunden sind. Der Planetenradträger ist mit der Eingangsseite eines Schaltgetriebes 66 gekoppelt, das ausgangsseitig über ein Differenzialgetriebe 68 die hinteren Räder 28 antreibt.

Bei einer anderen Ausführungsform kann das Zapfwellengetriebe 56 auch stromab des Summiergetriebes 60 angetrieben werden. Außerdem kann das Schaltgetriebe 66 als Lastschaltgetriebe ausgeführt sein. Bei noch einer anderen Ausführungsform können Summiergetriebe 60 den einzelnen Rädern 28 und ggf. auch den vorderen Rädern 26 zugeordnet werden. Bei einer weiteren Ausführungsform könnte der Elektromotor 62 sein Drehmoment direkt oder über ein Getriebe auf die Welle 42 oder eine andere Stelle des Antriebsstrang übertragen, d.h. das Summiergetriebe 60 könnte dann entfallen und der Elektromotor 62 könnte die Aufgaben des Generators 44 mit übernehmen. Bei noch einer anderen Ausführungsform könnte die gesamte mechanische Leistung durch den Elektromotor 62 erzeugt werden, wobei dann die maximalen Leistungen des Generators 44 und des Elektromotors 62 zu vergrößern wären, da der mechanische Antriebszweig entfällt.

Eine Steuereinrichtung 70 ist elektrisch mit dem Generator 44, einer Verbrennungsmotorsteuerung 76, einem Ladungsspeicher 78 in Form eines Akkumulators (oder hochkapazitiven Kondensators o.dgl.) und dem Elektromotor 62 verbunden. Weiterhin ist die Steuereinrichtung 70 mit einem Sensor 80 zur Erfassung der Stellung des Gaspedals 36 gekoppelt. Ein weiterer Sensor (nicht gezeigt) kann die Stellung eines Bremspedals (nicht gezeigt) oder den Druck im Bremssystem erfassen.

Das Schaltgetriebe 66 kann manuell durch den Bediener über einen Hebelmechanismus oder selbsttätig durch die Steuereinrichtung 70 oder über die Bedienerschnittstelle 38 und einen von der Steuereinrichtung 70 kontrollierten Aktor (nicht gezeigt) geschaltet werden. Auch die Zapfwellentrennkupplung 54 kann über eine Mechanik vom Bediener oder über die Bedienerschnittstelle 38 oder einen separaten Schalter und einen von der Steuereinrichtung 70 kontrollierten Aktor (nicht gezeigt) geschaltet werden. Analog kann auch die Kupplung 74 durch den Bediener mechanisch über ein Pedal (nicht gezeigt) oder über die Bedienerschnittstelle 38 und einen von der Steuereinrichtung 70 kontrollierten Aktor (nicht gezeigt) geschaltet werden.

Im Betrieb gibt der Bediener über das Gaspedal 36 eine gewünschte Geschwindigkeit des Traktors 12 vor, die über den Sensor 80 an die Steuereinrichtung 70 übermittelt wird, welche in einer Lastpunktverschiebungsbetriebsart die Verbrennungsmotorsteuerung 76 und den Elektromotor 62 abhängig von Signalen des Leistungs- oder Drehmomentverteilungsreglers 72 ansteuert. Abhängig von den Vorgaben des Leistungs- oder Drehmomentverteilungsreglers 72 entnimmt die Steuereinrichtung 70 in der Lastpunktverschiebungsbetriebsart elektrische Leistung aus dem Ladungsspeicher 78, um den Elektromotor 62 anzutreiben oder lädt den Ladungsspeicher 78 mit elektrischer Leistung aus dem Generator 44 auf. Zudem ist eine Rekuperationsbetriebsart vorgesehen, in welcher der Generator 44 im Schubbetrieb als Bremse dient und die kinetische Energie der Arbeitsmaschine zurückgewinnt und als elektrische Energie in den Ladungsspeicher 78 einspeist. Schließlich ist auch noch eine Boostbetriebsart vorgesehen, in welcher der Elektromotor 62 mit maximaler Leistung aus dem Ladungsspeicher 78 beaufschlagt wird, während auch der Verbrennungsmotor 40 mit maximaler Leistung betrieben wird.

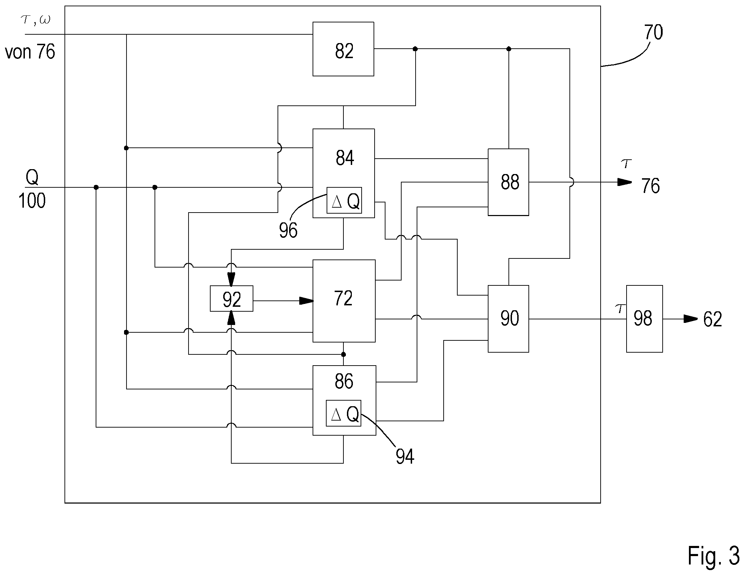

Die Figur 3 zeigt ein detailliertes Schema der Steuereinrichtung 70. Sie umfasst einen Zustandsumschalter 82, eine Rekuperationssteuerung 84 mit einem Ladungsmesser 96, den Leistungs- oder Drehmomentverteilungsregler 72, eine Booststeuerung 86 mit einem Ladungsmesser 94, einem Ladezustandssollwertbestimmer 92 und zwei Ausgangsumschalter 88, 90.

Im Betrieb werden dem Zustandsumschalter 82 von der Verbrennungsmotorsteuerung 76 als Eingangsgrößen die Drehzahl ω und das Lastmoment τ des Verbrennungsmotors 40 zugeführt. Der Zustandsumschalter 82 kann zusätzlich mit einer Information über das Lastmoment τ des Elektromotors 62 beaufschlagt werden, das anhand dessen elektrischer Größen abgeschätzt werden kann. Die Drehzahl ω und das Lastmoment τ des Verbrennungsmotors 40 und/oder des Elektromotors 62 können auch durch separate Sensoren erfasst werden. Diese Größen reichen aus, damit der Zustandsumschalter selbsttätig erkennen kann, wann ein Rekupertionsbetrieb zweckmäßig ist (z.B. wenn die Drehzahl des Verbrennungsmotors 40 über einem Schwellenwert liegt und die Summe der Lastmomente des Verbrennungsmotors 40 und des Elektromotors 62 unter einem ersten Schwellenwert liegt), wann ein Boostbetrieb zweckmäßig ist (z.B. wenn die erwähnte Summe der Lastmomente über einem zweiten Schwellenwert liegt, der größer als der erste Schwellenwert ist), und wann eine Lastpunktverschiebungsbetriebsart sinnvoll ist (z.B. wenn keine der anderen Betriebsarten zweckmäßig ist).

Je nachdem, welche Betriebsart gerade als zweckmäßig erkannt und daher ausgewählt ist, schaltet der Zustandsumschalter 82 die Ausgänge der Rekuperationssteuerung 84 oder des Leistungs- oder Drehmomentverteilungsreglers 72 oder der Booststeuerung 86 über die Ausgangsumschalter 88, 90 aktiv, d.h. ein Ausgangssignal der Rekuperationssteuerung 84 oder des Leistungs- oder Drehmomentverteilungsreglers 72 oder der Booststeuerung 86 wird der Verbrennungsmotorsteuerung 76 zugeführt, um die Leistung oder das Drehmoment des Verbrennungsmotors 40 vorzugeben. Ein Ausgangssignal der Rekuperationssteuerung 84 oder des Leistungs- oder Drehmomentverteilungsreglers 72 oder der Booststeuerung 86 wird auch einer Kontrollschaltung 98 des Elektromotors 62 zugeführt, welche die Leistung oder das Drehmoment des Elektromotors 62 vorgibt. Auch die Rekuperationssteuerung 84, der Leistungs- oder Drehmomentverteilungsregler 72 und der Booststeuerung 86 werden mit dem Ausgangssignal des Zustandsumschalters 82 beaufschlagt, um ihnen zu signalisieren, welche von ihnen gerade aktiv ist.

Die Booststeuerung 86 wird ebenfalls von der Verbrennungsmotorsteuerung 76 mit den Eingangsgrößen Drehzahl ω und Lastmoment τ des Verbrennungsmotors 40 und ggf. des Elektromotors 62 beaufschlagt. Außerdem erhält sie über einen Anschluss 100 ein Ladezustandssignal vom Ladungsspeicher 78. Bei der Boostbetriebsart veranlasst die Booststeuerung 86 den Verbrennungsmotor 40 und den Elektromotor 62 mit maximalem Drehmoment zu arbeiten, um Lastspitzen kurzfristig zu überwinden. Während der Boostbetriebsart erfasst der Ladungsmesser 96 die vom Ladungsspeicher 78 abgegebene Ladungsmenge.

Die Rekuperationssteuerung 84 wird ebenfalls von der Verbrennungsmotorsteuerung 76 mit den Eingangsgrößen Drehzahl ω und Drehmoment τ des Verbrennungsmotors 40 beaufschlagt. Außerdem erhält sie über den Anschluss 100 ein Ladezustandssignal vom Ladungsspeicher 78. Bei der Rekuperationsbetriebsart veranlasst die Rekuperationssteuerung 84 den Verbrennungsmotor 40 mit minimalem Drehmoment oder im Leerlauf zu arbeiten und den Generator 44 und/oder den Elektromotor 62 mit maximalem, negativen Drehmoment zu arbeiten, um die kinetische Energie der Arbeitsmaschine in elektrische Energie umzuwandeln, die im Ladungsspeicher 78 gespeichert wird. Dieses Drehmoment kann auch von der Stellung des Bremspedals oder vom Bremsdruck abhängen. Während der Rekuperationsbetriebsart erfasst der Ladungsmesser 94 die vom Ladungsspeicher 78 aufgenommene Ladungsmenge.

Der Leistungs- oder Drehmomentverteilungsregler 72 wird ebenfalls von der Verbrennungsmotorsteuerung 76 mit den Eingangsgrößen Drehzahl ω und Lastmoment τ des Verbrennungsmotors 40 und ggf. des Elektromotors 62 beaufschlagt. Außerdem erhält er über den Anschluss 100 ein Ladezustandssignal vom Ladungsspeicher 78. Bei der Lastpunktverschiebungsbetriebsart veranlasst der Leistungs- oder Drehmomentverteilungsregler 72 den Verbrennungsmotor 40 mit einem von ihm vorgegebenen Drehmoment oder Leistung zu arbeiten und gibt auch das Drehmoment oder die Leistung des Elektromotors 62 und somit auch einen Lade-oder Entladestrom des Ladungsspeichers 78 vor. Bei dem Leistungs- oder Drehmomentverteilungsregler 72 handelt es sich vorzugsweise um einen Proportional-Integral-Regler. Zu Details zum Aufbau und zur Wirkungsweise des Drehmomentverteilungsreglers 72 sei auf die Veröffentlichungen von Michiel Koot, J. T. B. A. Kessels, Bram de Jager, W. P. M. H. Heemels, P. P. J. van den Bosch, and Maarten Steinbuch: Energy management strategies for vehicular electric power systems, IEEE Transactions on Vehicular Technology, 54(3):771-782, 2005, und John T. B. A. Kessels, Michiel W. T. Koot, Paul P. J. van den Bosch, and Daniel B. Kok: Online energy management for hybrid electric vehicles, IEEE Transactions on Vehicular Technology, 57(6):3428-3440, 2008 verwiesen, deren Offenbarung durch Verweis mit in die vorliegenden Unterlagen aufgenommen wird.

Der Leistungs- oder Drehmomentverteilungsregler 72 steuert seine Ausgänge in einem Sinne an, dass versucht wird, einen bestimmten Ladezustand des Ladungsspeichers 78 aufrecht zu erhalten, wobei zusätzlich eine Verbesserung des Wirkungsgrades des Verbrennungsmotors 40 angestrebt wird. Dieser Sollwert des Ladezustands des Ladungsspeichers 78 entspricht bei bisherigen Leistungs- oder Drehmomentverteilungsreglern üblicherweise einem festen Wert von z.B. 50% der Kapazität des Ladungsspeichers 78. Gemäß der vorliegenden Erfindung wird dieser Sollwert jedoch durch den Ladezustandssollwertbestimmer 92 vorgegeben. Dieser wird mit den Signalen der Ladungsmesser 94, 96 beaufschlagt und übergibt dem Leistungs- oder Drehmomentverteilungsregler 72 einen Sollwert, der nach einem Boostbetrieb um den Wert des Ladungsmessers 96 vermindert und nach einem Rekuperationsbetrieb um den Wert des Ladungsmessers 94 vergrößert wird. Der Leistungs-oder Drehmomentverteilungsregler 72 kontrolliert seine Ausgangswerte derart, dass der vom Ladezustandssollwertbestimmer 92 bereitgestellte Sollwert angestrebt wird. Dadurch steht nach einem Rekuperationsbetrieb eine größere Ladung im Ladungsspeicher 78 bereit, die in einem späteren Boostbetrieb wieder zur Verfügung steht, und umgekehrt. Falls mehrfach nacheinander ein Rekuperationsbetrieb oder ein Boostbetrieb auftritt, kann der verschobene Sollwert des Ladezustands graduell (z. B. rampenförmig) auf den nominellen Sollwert des Ladungszustands zurückgeführt werden.

Anders als in der Figur 3 dargestellt, können die Booststeuerung 86 und der Leistungs- oder Drehmomentverteilungsregler 72 mit dem Signal des Sensors 80 des Gaspedals 36 (oder einer selbsttätigen Steuerung zur Vorgabe der Vortriebsgeschwindigkeit der Arbeitsmaschine) beaufschlagt werden, um die Sollgeschwindigkeit der Arbeitsmaschine bei der Berechnung der Ausgangswerte zu berücksichtigen.

## Patentansprüche

1. Verfahren zur Kontrolle eines Hybridantriebs, der einen Verbrennungsmotor (40), einen vom Verbrennungsmotor (40) antreibbaren Generator (44), einen Ladungsspeicher (78) und einen Elektromotor (62) umfasst und in einer Lastpunktverschiebungsbetriebsart, einer Rekuperationsbetriebsart und einer Boostbetriebsart betreibbar ist, wobei in der Lastpunktverschiebungsbetriebsart ein Leistungs- oder Drehmomentverteilungsregler (72) die vom Verbrennungsmotor (40) und vom Elektromotor (62) abgegebenen Leistungen bzw. Drehmomente im Sinne einer Aufrechterhaltung eines vorbestimmten Sollwerts des Ladezustands des Ladungsspeichers (78) vorgibt und der Sollwert des Ladezustands des Ladungsspeichers (78) in der Lastpunktverschiebungsbetriebsart abhängig von Ladezustandsänderungen des Ladungsspeichers (78) in einer zuvor durchlaufenen Rekuperationsbetriebsart und/oder Boostbetriebsart verschoben wird, **dadurch gekennzeichnet, dass** der Sollwert des Ladezustands des Ladungsspeichers (78) um eine während einer zuvor durchlaufenen Rekuperationsbetriebsart erfasste, vom Ladungsspeicher (78) zusätzlich aufgenommene Ladungsmenge erhöht wird und/oder der Sollwert des Ladezustands des Ladungsspeichers (72) um eine während einer zuvor durchlaufenen Boostbetriebsart erfasste, vom Ladungsspeicher (78) abgegebene Ladungsmenge vermindert wird.

2. Verfahren nach Anspruch 1, wobei der Leistungs- oder Drehmomentverteilungsregler (72) einen Proportional-Integral-Regler umfasst.

3. Verfahren nach Anspruch 1 oder 2, wobei im Falle mehrfach nacheinander auftretender Rekuperationsbetriebsarten oder Boostbetriebsarten der verschobene Sollwert des Ladezustands graduell auf einen nominellen Sollwert des Ladungszustands zurückgeführt wird, um die zulässigen Ladungsgrenzen des Ladungsspeichers nicht zu verletzen.

4. Steuereinrichtung (70) zur Kontrolle eines Hybridantriebs, der einen Verbrennungsmotor (40), einen vom Verbrennungsmotor (40) antreibbaren Generator (44), einen Ladungsspeicher (78) und einen Elektromotor (62) umfasst und durch die Steuereinrichtung (70) zwischen einer Lastpunktverschiebungsbetriebsart, einer Rekuperationsbetriebsart und einer Boostbetriebsart umschaltbar ist, wobei in der Lastpunktverschiebungsbetriebsart ein Leistungs- oder Drehmomentverteilungsregler (72) der Steuereinrichtung (70) betreibbar ist, die vom Verbrennungsmotor (40) und vom Elektromotor (62) abgegebenen Leistungen bzw. Drehmomente im Sinne einer Aufrechterhaltung eines vorbestimmten Sollwerts des Ladezustands des Ladungsspeichers (78) vorzugeben und ein Ladezustandssollwertbestimmer (92) betreibbar ist, den Sollwert des Ladezustands des Ladungsspeichers (78) in der Lastpunktverschiebungsbetriebsart abhängig von Ladezustandsänderungen des Ladungsspeichers (78) in einer zuvor durchlaufenen Rekuperationsbetriebsart und/oder Boostbetriebsart zu verschieben, **dadurch gekennzeichnet, dass** der Ladezustandssollwertbestimmer (92) betreibbar ist, den Sollwert des Ladezustands des Ladungsspeichers (78) um eine während einer zuvor durchlaufenen Rekuperationsbetriebsart erfasste, vom Ladungsspeicher (78) zusätzlich aufgenommene Ladungsmenge zu erhöhen und/oder dass der Ladezustandssollwertbestimmer (92) betreibbar ist, den Sollwert des Ladezustands des Ladungsspeichers (78) um eine während einer zuvor durchlaufenen Boostbetriebsart erfasste, vom Ladungsspeicher (78) abgegebene Ladungsmenge zu vermindern.

5. Steuereinrichtung (70) nach Anspruch 4, wobei der Leistungs- oder Drehmomentverteilungsregler (72) einen Proportional-Integral-Regler umfasst.

6. Arbeitsmaschine mit einem Hybridantrieb und einer Steuereinrichtung (70) nach einem der Ansprüche 4 oder 5.

## Claims

1. Method for controlling a hybrid drive which comprises an internal combustion engine (40), a generator (44) which can be driven by the internal combustion engine (40), a charge storage device (78) and an electric motor (62), and can be operated in a load point shift operating mode, a recuperation operating mode and a boost operating mode, wherein in the load point shift operating mode a power or torque distribution regulator (72) predefines the power levels or torques which are output by the internal combustion engine (40) and by the electric motor (62) with the aim of maintaining a predetermined target value of the state of charge of the charge storage device (78), and the target value of the state of charge of the charge storage device (78) is shifted in the load point shift operating mode as a function of changes in the state of charge of the charge storage device (78) in a previously passed-through recuperation operating mode and/or boost operating mode, **characterized in that** the target value of the state of charge of the charge storage device (78) is increased by a charge quantity which has been sensed during a previously passed-through recuperation operating mode and is additionally taken up by the charge storage device (78), and/or the target value of the state of charge of the charge storage device (72) is reduced by a charge quantity which has been sensed during a previously passed-through boost operating mode and is output by the charge storage device (78).

2. Method according to Claim 1, wherein the power or torque distribution regulator (72) comprises a proportional-integral regulator.

3. Method according to Claim 1 or 2, wherein in the case of multiply successively occurring recuperation operating modes or boost operating modes the shifted target value of the state of charge is reduced gradually to a nominal target value of the state of charge, in order to avoid impinging the permissible charge limits of the charge storage device.

4. Control device (70) for controlling a hybrid drive which comprises an internal combustion engine (40), a generator (44) which can be driven by means of the internal combustion engine (40), a charge storage device (78) and an electric motor (62) and can be switched by the control device (70) between a load point shift operating mode, a recuperation operating mode and a boost operating mode, wherein in the load point shift operating mode an power or torque distribution regulator (72) of the control device (70) can be operated to predefine the power levels or torques which are output by the internal combustion engine (40) and the electric motor (62) with the aim of maintaining a predetermined target value of the state of charge of the charge storage device (78), and a state of charge target value determiner (92) can be operated to shift the target value of the state of charge of the charge storage device (78) in the load point shift operating mode as a function of changes in the state of charge of the charge storage device (78) in a previously passed-through recuperation operating mode and/or boost operating mode, **characterized in that** the state of charge target value determiner (92) can be operated to increase the target value of the state of charge of the charge storage device (78) by a charge quantity which has been sensed during a previously passed-through recuperation operating mode and is additionally taken up by the charge storage device (78), and/or **in that** the state of charge target value determiner (92) can be operated to reduce the target value of the state of charge of the charge storage device (78) by a charge quantity which has been sensed during a previously passed-through boost operating mode and is output by the charge storage device (78).

5. Control device (70) according to Claim 4, wherein the power or torque distribution regulator (72) comprises a proportional-integral regulator.

6. Working machine having a hybrid drive and a control device (70) according to one of Claims 4 or 5.

## Revendications

1. Procédé de contrôle d'un groupe propulseur hybride, lequel comprend un moteur à combustion interne (40), un générateur (44) qui peut être entraîné par le moteur à combustion interne (40), un accumulateur de charge (78) et un moteur électrique (62), et qui peut fonctionner dans un régime de décalage du point de charge, un régime de récupération et un régime de suralimentation, procédé selon lequel dans le fonctionnement en régime de décalage du point de charge, un régulateur de distribution de puissance ou de couple (72) prédéfinit les puissances ou les couples délivrés par le moteur à combustion interne (40) et par le moteur électrique (62) dans le sens d'un maintien d'une valeur de consigne prédéfinie de l'état de charge de l'accumulateur de charge (78) et la valeur de consigne de l'état de charge de l'accumulateur de charge (78), dans le fonctionnement en régime de décalage du point de charge, est décalée en fonction des variations de l'état de charge de l'accumulateur de charge (78) dans un régime de récupération et/ou un régime de suralimentation traversé précédemment, **caractérisé en ce que** la valeur de consigne de l'état de charge de l'accumulateur de charge (78) est augmentée d'une quantité de charge absorbée en plus par l'accumulateur de charge (78), acquise pendant un régime de récupération traversé précédemment, et/ou la valeur de consigne de l'état de charge de l'accumulateur de charge (72) est réduite d'une quantité de charge délivrée par l'accumulateur de charge (78), acquise pendant un régime de suralimentation traversé précédemment.

2. Procédé selon la revendication 1, le régulateur de distribution de puissance ou de couple (72) comprenant un régulateur proportionnel-intégral.

3. Procédé selon la revendication 1 ou 2, selon lequel, dans le cas de régimes de récupération ou de régimes de suralimentation qui se produisent plusieurs fois successivement, la valeur de consigne décalée de l'état de charge est graduellement ramenée à une valeur de consigne nominale de l'état de charge afin de ne pas léser les limites de charge admissibles de l'accumulateur de charge.

4. Dispositif de commande (70) pour le contrôle d'un groupe propulseur hybride, lequel comprend un moteur à combustion interne (40), un générateur (44) qui peut être entraîné par le moteur à combustion interne (40), un accumulateur de charge (78) et un moteur électrique (62), et qui peut être permuté par le dispositif de commande (70) entre un régime de décalage du point de charge, un régime de récupération et un régime de suralimentation, dispositif avec lequel, dans le fonctionnement en régime de décalage du point de charge, un régulateur de distribution de puissance ou de couple (72) du dispositif de commande (70) peut être utilisé pour prédéfinir les puissances ou les couples délivrés par le moteur à combustion interne (40) et par le moteur électrique (62) dans le sens d'un maintien d'une valeur de consigne prédéfinie de l'état de charge de l'accumulateur de charge (78), et un définisseur de valeur de consigne de l'état de charge (92) peut être utilisé pour décaler la valeur de consigne de l'état de charge de l'accumulateur de charge (78), dans le fonctionnement en régime de décalage du point de charge, en fonction des variations de l'état de charge de l'accumulateur de charge (78) dans un régime de récupération et/ou un régime de suralimentation traversé précédemment, **caractérisé en ce que** le définisseur de valeur de consigne de l'état de charge (92) peut être utilisé pour augmenter la valeur de consigne de l'état de charge de l'accumulateur de charge (78) d'une quantité de charge absorbée en plus par l'accumulateur de charge (78), acquise pendant un régime de récupération traversé précédemment, et/ou **en ce que** le définisseur de valeur de consigne de l'état de charge (92) peut être utilisé pour réduire la valeur de consigne de l'état de charge de l'accumulateur de charge (78) d'une quantité de charge délivrée par l'accumulateur de charge (78), acquise pendant un régime de suralimentation traversé précédemment.

5. Dispositif de commande (70) selon la revendication 4, le régulateur de distribution de puissance ou de couple (72) comprenant un régulateur proportionnel-intégral.

6. Machine de travail équipée d'un groupe propulseur hybride et d'un dispositif de commande (70) selon l'une des revendications 4 ou 5.
